Europäisches Patentamt

European Patent Office

Office européen des brevets

(19)

(11) Veröffentlichungsnummer: **0 283 988**
**A2**

(12) **EUROPÄISCHE PATENTANMELDUNG**

(21) Anmeldenummer: 88104458.0

(51) Int. Cl.⁴: **B29B 7/76**

(22) Anmeldetag: 21.03.88

(30) Priorität: 24.03.87 DE 3709557

(43) Veröffentlichungstag der Anmeldung:
28.09.88 Patentblatt 88/39

(84) Benannte Vertragsstaaten:
**AT BE CH DE ES FR GB GR IT LI NL SE**

(71) Anmelder: **WEMA WERKZEUG- UND MASCHINENBAUGESELLSCHAFT MBH**
**Lehmgrubenweg 17**
**D-8990 Lindau(DE)**

(72) Erfinder: **Naumann, Willi**
**Otto-Flake-Weg 2**
**D-7560 Gaggenau(DE)**

(74) Vertreter: **Koscholke, Gotthold, Dr.-Ing.**
**Rheinallee 147**
**D-4000 Düsseldorf 11(DE)**

(54) Vorrichtung und Verfahren zur Bildung eines Kunststoff-Reaktionsgemisches.

(57) Eine Vorrichtung zur Bildung eines Kunststoff-Reaktionsgemisches weist wenigstens ein Ventilelement (11) mit einer stirnseitigen Lagerfläche (16) auf, die an einer Sitzfläche (17) eines Gehäuses (1) anliegt. Von der Sitzfläche (17) geht einerseits ein Mischkammer-Einlaß (27) und andererseits ein Austrittskanal (22 bzw. 24) aus. Die Austrittsöffnung (15) des Ventilelements (11) ist in der stirnseitigen Lagerfläche (16) exzentrisch zur Hauptachse (H) angeordnet. Vorteilhaft ist eine in einem Winkel zu einer Mischkammer (2) angeordnete Zusatzkammer (51) vorhanden, in der ein Hilfsschieber (52) zwischen einer hinteren Position und einer vorderen Abschlußposition hin-und herbewegbar ist.

FIG. 1

EP 0 283 988 A2

## Vorrichtung und Verfahren zur Bildung eines Kunststoff-Reaktionsgemisches

Die Erfindung bezieht sich auf eine Vorrichtung zur Bildung eines Kunststoff-Reaktionsgemisches aus wenigstens zwei Komponenten, insbesondere für die Herstellung von Polyurethanschaum-Produkten, und auf Verfahren dazu.

Eine bekannte Vorrichtung (DE-PS 22 19 389) weist bei einer von mehreren Ausführungen zwei von Gehäusebohrungen aufgenommene Drehschieber auf, deren hohle Innenräume durch Schlitze im Gehäuse in jeder Drehstellung mit Zuführungsleitungen für die Komponenten verbunden sind. Jeder Drehschieber hat eine jeweils vom Innenraum ausgehende radiale Einspritzöffnung und eine radiale Rücklaufbohrung. Je nach der Winkelstellung der Drehschieber weisen entweder deren Einspritzöffnungen durch Ausschnitte in einer Wandung in eine sich obeliskartig erweiternde Mischkammer hinein, während die Rücklaufbohrungen durch die die Drehschieber umgebenden Gehäusebohrungen verschlossen sind, oder die Einspritzöffnungen sind durch die Gehäusebohrungen verschlossen, während die Rücklaufbohrungen mit zu den Rücklaufleitungen führenden Gehäusekanälen übereinstimmen. Die Drehschieber sind mit ineinandergreifenden Zahnrädern versehen.

Eines derselben kämmt mit einer Zahnstange, die mittels einer hydraulischen Zylinder-Kolben-Einheit verschiebbar ist. Außerdem sind Rückstellfedern vorgesehen.

An die sich nach außen hin erweiternde Mischkammer wird ein Formwerkzeug so angelegt, daß die Mischkammer sich an der Stelle eines Angußkanals befindet, der zu einem Formenhohlraum führt.

Bei dieser Vorrichtung sollen die Drehschieber in den Gehäusebohrungen leicht drehbar und dennoch abdichtend eingepaßt sein. Es handelt sich hierbei um einander widersprechende Forderungen. Ist zwischen einem Drehschieber und der Wandung der Gehäusebohrung ein Spiel vorhanden oder tritt ein solches durch Verschleiß auf, so ist ein sicheres Verschließen der radialen Öffnungen nicht gewährleistet. Weiterhin verbleibt nach jedem Arbeitstakt ausreagiertes Gemisch in der Mischkammer, das dann jeweils daraus entfernt werden muß. Um ein Anhaften von in der Mischkammer ausreagierten Gemischresten an deren Wandung und an den Übergängen auf die Mantelflächen der Drehschieber zu vermeiden, muß eine besondere Losreißvorrichtung für die Drehschieber vorgesehen werden.

Aufgabe der Erfindung ist es, eine Vorrichtung der genannten Gattung zu schaffen, die den vielseitigen Anforderungen hinsichtlich der Ausbildung und der Funktionsweise in hohem Maße gerecht wird. Dies gilt u.a. für die Erfüllung der Voraussetzungen für einen sicheren und günstigen Ablauf der schließlich auch das zu erzeugende Produkt bestimmenden Vorgänge bei einem Arbeitstakt, namentlich, was die Beherrschung der Komponenten-Zuführung bzw. -Rückführung und den Übergang zwischen diesen beiden Zuständen anbelangt. Mit der Erfindung soll es weiterhin bei einer Vorrichtung der genannten Art möglich gemacht werden, im Bedarfsfall die Durchgangsquerschnitte für die Komponenten zum Eintritt in die Mischkammer entsprechend den Erfordernissen ein-und nachstellen zu können. Ein besonderes Augenmerk richtet die Erfindung ferner darauf, Beeinträchtigungen des herzustellenden Erzeugnisses durch etwaige Unvollkommenheiten zu Beginn des Mischvorganges so weit wie möglich zu vermeiden. Die Erfindung strebt weiterhin auch die vorteilhafte Ausbildung von Mischvorrichtungen im einzelnen an und richtet sich ferner auf Verfahrensweisen zur Bildung von Reaktionsgemischen unter Verwendung günstig ausgebildeter Vorrichtungen. Weitere mit alledem zusammenhängende Probleme, mit denen sich die Erfindung befaßt, ergeben sich aus der jeweiligen Erläuterung der aufgezeigten Lösung.

Bei einer Vorrichtung nach dem Oberbegriff des Anspruchs 1 sieht die Erfindung vor, daß das Ventilelement eine stirnseitige Lagerfläche aufweist, die an einer Sitzfläche des Gehäuses anliegt, daß von der Sitzfläche einerseits ein Mischkammer-Einlaß und andererseits ein Austrittskanal, wenigstens mit einem Teil seines Querschnitts, ausgeht, daß die Austrittsöffnung des Ventilelements in der stirnseitigen Lagerfläche desselben exzentrisch zur Hauptachse angeordnet ist, derart, daß diese Austrittsöffnung durch jeweiliges Drehen des Ventilelements mit dem Mischkammer-Einlaß bzw. mit dem Austrittskanal verbindbar ist, und daß der Mischkammer ein Ausstoßschieber zugeordnet ist, der mittels eines Antriebs zwischen einer zurückgezogenen Position und einer die Mischkammer zumindest weitgehend ausfüllenden vorgeschobenen Position hin-und herbewegbar ist.

Eine solche Vorrichtung zeichnet sich durch eine Reihe wesentlicher Vorteile aus. Weil die funktionsmäßig einander zugeordneten Öffnungen für den Durchtritt der betreffenden Komponente, sei es beim Einspritzvorgang, sei es bei der Rückführung bzw. Zirkulation, in ebenen Anlageflächen, nämlich einer stirnseitigen Fläche des Ventilelements und einer Sitzfläche des Gehäuses, vorgesehen sind, ist eine einwandfreie und sichere Abdichtung bei den jeweils funktionsmäßig einander zugeordneten Partien erreicht, ohne daß die Beweglichkeit des Ventilelements dadurch beeinträchtigt ist. Die Ventilelemente können ggfs. im Sinne eines Andrückens der Lagerfläche an die Sitzfläche zusätzlich durch ein oder mehrere Druckfedern oder andere geeignete Druckaufbringungselemente belastet sein.

Durch den der Mischkammer zugeordneten Ausstoßschieber ist u.a. gewährleistet, daß die Mischkammer frei von Resten oder Rückständen bleibt. Die Mischkammer hat zweckmäßig einen regelmäßgen Querschnitt, insbesondere einen Kreisquerschnitt, obgleich auch andere Formen nicht ausgeschlossen sind. Die Maßnahme, einen Ausstoßschieber in einer zylindrischen Mischkammer vorzusehen, ist an sich bekannt, wurde jedoch bei einer Vorrichtung der hier in Rede stehenden Art noch nicht angewendet.

Die Art und Ausbildung der Ventilelemente bietet bei allen anderen Vorteilen auch die Möglichkeit einer weitgehend freizügigen Gestaltung im einzelnen. Dies gilt besonders auch für die Austrittsöffnung, die vorteilhaft eine Duse sein kann, sei es eine Lochdüse, sei es namentlich eine einstellbare Düse. Es kann sich dabei insbesondere um eine mit einer einstellbaren Nadel od.dgl. versehenen Düse handeln.

Des weiteren bestehen verschiedene Möglichkeiten für die Anordnung des Innenraumes im Ventilelement. Bei einer praktischen Ausführung ist dieser Innenraum unter einem Winkel gegenüber der Hauptachse des Ventilelements angeordnet. Dies ergibt eine einfache und auch fertigungsmäßig günstige Ausführung.

Insbesondere wird die Ausbildung der Vorrichtung so getroffen, daß die Richtungen der Austrittsöffnungen der Ventilelemente in der Einspritzposition unter einem spitzen Winkel stehen. Dies ist für den Mischvorgang sehr günstig. Der Winkel liegt vorteilhaft bei etwa 60 Grad, kann aber auch noch kleiner sein.

Für die Anordnung und Größe der einzelnen Öffnungen oder Mündungen bestehen verschiedene Möglichkeiten. Für bestimmte Fälle kann es günstig sein, wenn zwischen der Einspritzposition und der Zirkulationsposition des Ventilelements ein Schließbereich vorhanden ist, in dem die Austrittsöffnung des Ventilelements weder mit dem Mischkammer-Einlaß noch mit dem Austrittskanal in Verbindung steht. Es kann aber auch von Vorteil sein, zwischen der Einspritzposition und der Zirkulationsposition des Ventilelements einen Übergangsbereich vorzusehen, derart, daß eine gewisse Überschneidung vorhanden ist. Dies kann zur Vermeidung von Druckstößen zweckmäßig sein.

Zum Drehen der Ventilelemente lassen sich Zahnstangentriebe vorsehen, wie dies grundsätzlich bekannt ist. Es können aber auch andere geeignete Antriebselemente in Betracht kommen.

Bei einer vorteilhaften Ausführung ist ein Druckmittelantrieb zum Drehen wenigstens eines Ventilelements mit einem Druckmittelantrieb zum Bewegen des Ausstoßschiebers kombiniert. Dies hat nicht nur den Vorteil einer kompakten Bauweise, sondern kann auch für die Funktion günstig sein.

Insbesondere läßt sich die Ausbildung so treffen, daß anschließend an einen ersten Zylinder mit erstem Kolben als Antrieb für den Ausstoßschieber ein zweiter Zylinder mit zweitem Kolben als Ventilelement-Antrieb vorgesehen ist, wobei eine Kolbenstange des zweiten Kolbens mit einem zum Ventilelement führenden Getriebeglied über eine bewegungsübertragende Verbindung gekuppelt ist.

In weiterer Ausgestaltung sind dabei zwei einander entsprechende Räume der beiden Zylinder leitungsmäßig miteinander verbunden. Es ist dann Druckmedium beiden Zylindern von einer Leitung aus zuführbar, so daß beide Kolben entsprechend beaufschlagt werden.

Der zweite Kolben kann einen dem ersten Kolben zugewandten und zur zeitweiligen Anlage an diesem eingerichteten Stößel aufweisen. Dadurch wird u.a. der zweite Kolben durch den ersten Kolben bei dessen Rückgang mechanisch mitgenommen und in die Endposition gebracht. Dies stellt nicht nur eine einfache Ausführung im Hinblick auf die Steuerung der Vorgänge dar, sondern bringt auch den Vorteil mit sich, daß die Hübe der Kolben jeweils günstig gewählt werden können. Der Hub des zweiten Kolbens für den Ventilelement-Antrieb beträgt vorteilhaft nur einen Bruchteil des Hubes des ersten Kolbens fur den Ausstoßschieber-Antrieb.

In der bewegungsübertragenden Verbindung zwischen der Kolbenstange des zweiten Kolbens und einem zum Ventilelement führenden Getriebeglied läßt sich ein zweckmäßig einstellbarer Leerweg vorsehen, derart, daß das Getriebeglied und somit das Ventilelement erst dann eine Verstellung erfährt, wenn der Ausstoßschieber bereits einen gewissen Weg zurückgelegt hat. Eine solche Vorrichtung eignet sich u.a. besonders gut zur Durchführung eines Verfahrens, bei dem am Ende eines Mischvorganges die Ventilelemente erst dann aus ihrer Einspritzposition in Richtung auf die Zirkulationsposition verstellt werden, wenn der Ausstoßschieber sich so weit vorbewegt hat, daß er die Mischkammer-Einlässe überdeckt.

Die Erfindung richtet sich weiterhin auf eine Vorrichtung zur Bildung eines Kunststoff-Reaktionsgemisches aus wenigstens zwei Komponenten, insbesondere für die Herstellung von Polyurethanschaum-Produkten, mit einem Gehäuse, in dem für jede Komponente ein Eintrittskanal und ein Austrittskanal vorhanden ist, einer Mischkammer mit Einlässen für die Komponenten und einem Auslaß für das Gemisch. Sie kennzeichnet sich dadurch, daß gegenüber den Mischkammer-Einlässen für die Komponenten eine in einem Winkel zur Mischkammer angeordnete Zusatzkammer vorhanden ist. Dies trägt nicht nur zur intensiven Vermischung der Komponenten bei, sondern hat auch noch den wichtigen Vorteil, daß das Anfangsgemisch, das möglicherweise im ersten Augenblick noch nicht ganz vollkommen ist, nicht zuerst in den Formhohlraum gelangt. Die Zusatzkammer ist zweckmäßig im rechten Winkel zur Mischkammer angeordnet. Je nach den Erfordernissen, kann dieser Winkel aber auch anders gewählt werden.

Vorteilhaft wird in der Zusatzkammer ein deren Querschnitt angepaßter Hilfsschieber vorgesehen, der mittels steuerbaren Antriebs zwischen einer hinteren Position und einer vorderen Abschlußposition, in der eine Stirnfläche des Hilfsschiebers einen Teil der Wandung der Mischkammer bildet, hin-und herbewegbar ist. Mittels eines solchen Schiebers kann das in der Zusatzkammer befindliche Gemisch zu einem geeigneten Zeitpunkt in die Mischkammer ausgeschoben werden, um dann von dieser in die Form zu gelangen.

Der Querschnitt der Zusatzkammer und dementsprechend auch derjenige des Hilfsschiebers kann kreisförmig sein. In bestimmten Fällen kann es aber auch vorteilhaft sein, einen prismatischen Querschnitt zu wählen, namentlich einen quadratischen oder rechteckigen Querschnitt.

Die Erfindung betrifft weiterhin ein Verfahren zur Bildung eines Kunststoff-Reaktionsgemisches aus wenigstens zwei Komponenten mit einer Vorrichtung, die ein oder mehrere Merkmale der vorstehend erläuterten Art aufweist. Das Verfahren kennzeichnet sich dadurch, daß jeweils bei einem Arbeitstakt bei in seiner vorderen Abschlußposition befindlichem Hilfsschieber und zurückgezogenem Ausstoßschieber der Hilfsschieber in engem zeitlichem Zusammenhang mit dem Öffnen der Mischkammer-Einlässe in seine hintere Position bewegt wird, so daß die Zusatzkammer dadurch freigegeben wird, und daß gegen Ende des Mischvorganges noch vor dem Verschließen der Mischkammer-Einlässe und dem Vorbewegen des Ausstoßschiebers der Hilfsschieber wiederum in seine vordere Abschlußposition gebracht wird, worauf die Vorbewegung des Ausstoßschiebers erfolgt.

Hierdurch wird erreicht, daß das Anfangsgemisch, welches zu Beginn des Vorganges in der Vorkammer ist, nicht zuerst in den Formhohlraum gelangt, sondern erst gegen Ende des Vorganges. Selbst wenn sich in Ausnahmefällen dieses Anfangsgemisch bis dahin noch nicht völlig vergleichmäßigt haben sollte, so wird auf diese Weise immer noch ein sehr gutes Ergebnis erzielt.

Die Erfindung ist in erster Linie für die Anwendung bei sog. Hochdruck-Mischprozessen gedacht. Es ist aber auch eine Anwendung in niedrigeren Druckbereichen nicht ausgeschlossen.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen. Es zeigen:

Fig. 1 eine Ausführung einer Vorrichtung mit Mischkopf in einem Längsschnitt,

Fig. 2 einen Schnitt nach der Linie II - II in Fig. 1, wobei Ventilelemente in unterschiedlichen Positionen wiedergegeben sind,

Fig. 3 eine schematische Darstellung eines Ventilelements in einem Schnitt nach der Linie III - III in Fig. 4,

Fig. 4 einen Schnitt nach der Linie IV - IV in Fig. 3,

Fig. 5 einen der Fig. 3 entsprechenden Schnitt nach der Linie V - V in Fig. 6 mit dem Ventilelement in einer anderen Position,

Fig. 6 einen Schnitt nach der Linie VI - VI in Fig. 5,

Fig. 7 den unteren Teil eines Ventilelements in Einspritzposition in vergrößertem Maßstab,

Fig. 8 einen Schnitt nach der Linie VIII - VIII in Fig. 7,

Fig. 9 einen der Fig. 7 entsprechenden Schnitt mit dem Ventilelement in einer Zirkulationsposition,

Fig. 10 einen vergrößerten, zum Teil vereinfachten Schnitt durch Mischkammer und Zusatzkammer,

Fig. 11 einen Schnitt nach der Linie XI - XI in Fig. 10,

Fig. 12 einen der Fig. 11 entsprechenden Schnitt einer abgewandelten Ausführung und

Fig. 13 teils schematisch eine Steuereinrichtung.

Die dargestellte Vorrichtung dient zur Bildung eines Gemisches aus zwei Komponenten, wie es für die Erzeugung von Schaumstoff-Teilen in Betracht kommt, insbesondere solchen aus Polyurethan. Abweichend von der gezeigten speziellen Ausführung können auch mehr als zwei Aggregate der weiter unten noch im einzelnen erläuterten Art für eine größere Anzahl von Komponenten vorhanden sein.

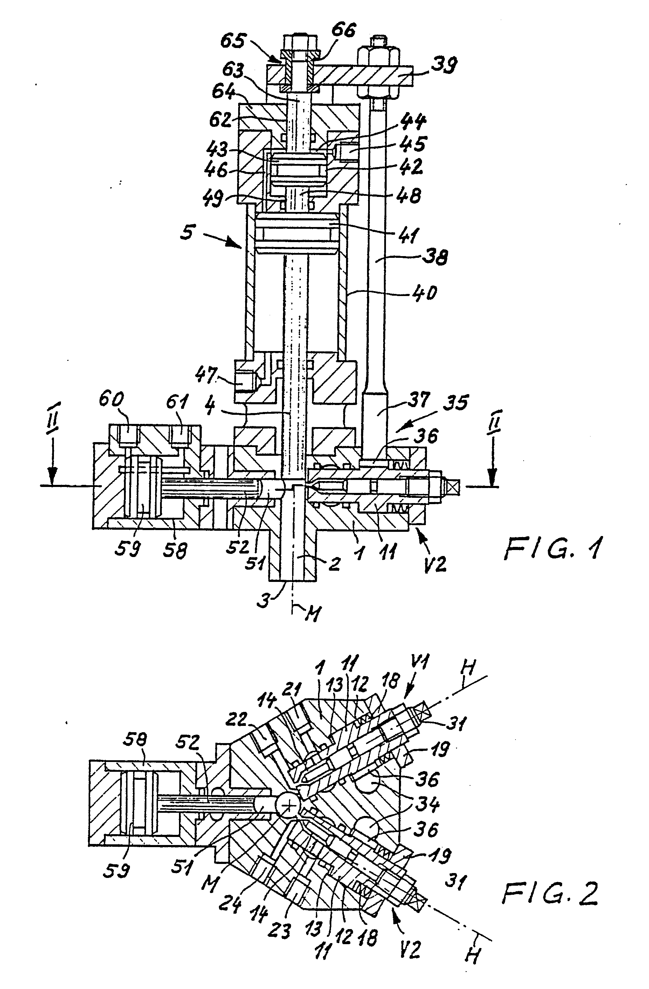

In einem ein-oder mehrteiligen Gehäuse 1 befindet sich eine beispielsweise zylindrische Mischkammer 2, deren Auslaß 3 unmittelbar an den Einlaß einer nicht dargestellten Form angesetzt werden kann, wie dies an sich bekannt ist. Ein Ausstoßschieber 4, dessen Querschnitt demjenigen der Mischkammer 2 entspricht, ist mittels eines insgesamt mit der Zahl 5 bezeichneten Antriebs aus einer in Fig. 1 gezeigten zurückgezogenen und somit die Mischkammer 2 freigebenden Position in eine vorgeschobene, die Mischkammer zumindest weitgehend ausfüllende Position, in der seine Stirnseite insbesondere mit dem Ende des Auslasses 3 der Mischkammer 2 abschließt, und umgekehrt bewegbar. Die Mittelachse der Mischkammer 2 ist mit dem Buchstaben M bezeichnet.

In einer zum Mittelachse M senkrechten Ebene sind zwei Ventilaggregate V1 und V2 im Gehäuse 1 so angeordnet, daß ihre Hauptachsen H in einem spitzen Winkel zueinander stehen, insbesondere einem Winkel zwischen 50 und 70 Grad. Jedes Ventilaggregat V1 und V2 weist ein Ventilelement 11 auf, das in einer abgestuften Gehäusebohrung 12 um die Hauptachse H drehbar ist.

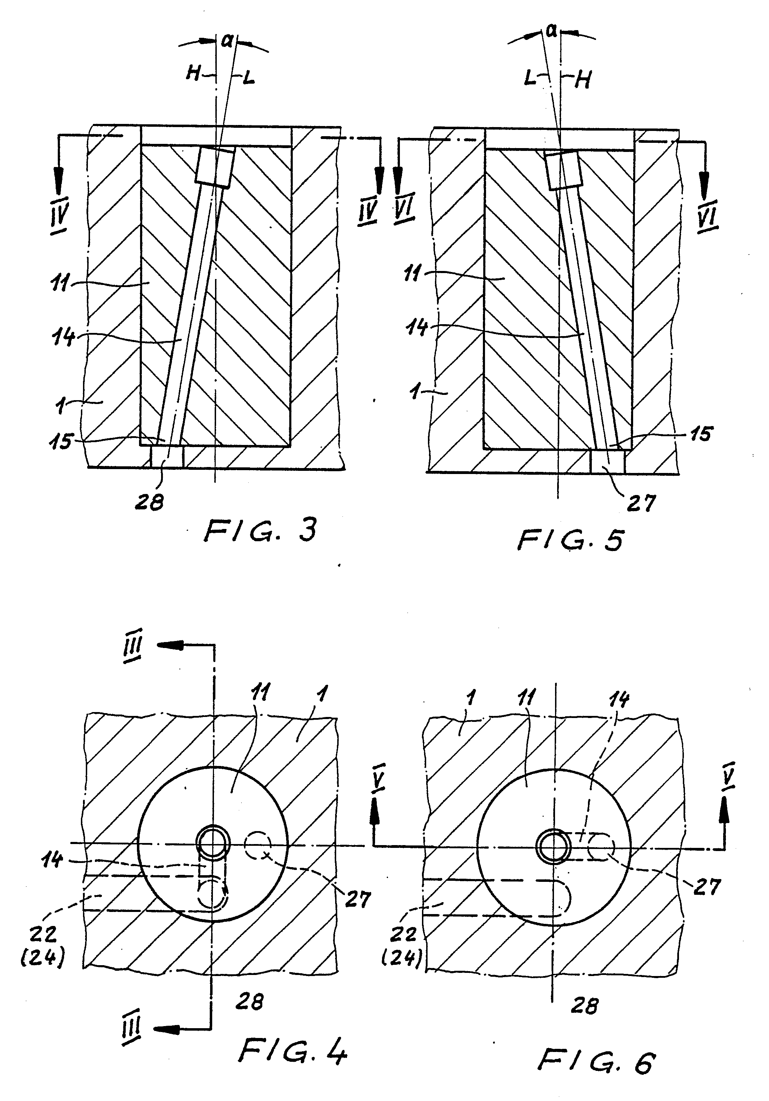

Wie schematisch die Fig. 3 bis 6 und im übrigen besonders Fig. 2, 7 und 9 erkennen lassen, weist jedes Ventilelement 11 einen Innenraum 14 in Form einer Bohrung od.dgl. auf, dessen Längsachse L gegenüber der Hauptachse H um einen spitzen Winkel a geneigt ist, derart, daß eine am Ende des Hohlraumes 14 befindliche Austrittsöffnung 15 des Ventilelements 11 eine exzentrische Lage zur Hauptachse H hat.

Jedes Ventilelement 11 weist eine stirnseitige Lagerfläche 16 auf, die an einer Sitzfläche 17 des Gehäuses 1 anliegt. Die Ventilelemente 11 sind durch Tellerfederpakete 18 mit einer solchen Kraft belastet, daß die Lagerfläche 16 unter Belassung einer drehenden Gleitbewegung fest an die Sitzfläche 17 angedrückt gehalten wird. Zwischen der Schulter 13 in der Bohrung 12 und einer dieser zugewandten Absetzung am Ventilelement 11 ist dazu ein geringes Spiel belassen. Das Tellerfederpaket liegt mit seinem anderen Ende an einer am Gehäuse befestigten Deckelscheibe 19 an.

Mit den Zahlen 21 und 23 sind jeweils zu den Ventilaggregaten V1 und V2 führende Eintrittskanäle für die beiden Komponenten und mit den Zahlen 22 und 24 Austrittskanäle für die Komponenten bezeichnet. Zur Zu-und Abführung dienen entsprechende Rohr-oder Schlauchleitungen, die mittels bekannter Anschlußteile mit dem Gehäuse 1 verbunden sind. Die Versorgungseinrichtungen für die Komponenten mit Behältern, Dosierpumpen od.dgl. können von bekannter Art sein und sind nicht dargestellt.

Die Eintrittskanäle 21 und 23 münden in ringförmige Ausnehmungen 25 im Gehäuse 1. Die Ventilelemente 11 weisen radiale Bohrungen 26 auf, über die eine ständige Verbindung zwischen dem Innenraum 14 und den Ausnehmun gen 25 und somit den Eintrittskanälen 21 bzw. 23 hergestellt ist.

Von jeder Sitzfläche 17 geht ein zur Mischkammer 2 führender Einlaß 27 aus, über den während des Betriebes die betreffende Komponente in die Mischkammer 2 gelangt. Des weiteren geht von der Sitzfläche 17 das Ende des Austrittskanals 22 bzw. 24 aus. Bei der dargestellten Ausführung setzt sich der Austrittskanal 22 bzw. 24 im Bereich der Sitzfläche 17 als Nut bis zu einer Einmündungsstelle 28 fort.

Sowohl der Einlaß 27 als auch die Einmündungsstelle 28 sind mit Bezug auf die Hauptachse H radial versetzt angeordnet, und zwar nach verschiedenen Richtungen, bei der gezeigten vorteilhaften Ausführung um einen Winkel von 90 Grad. Dies lassen insbesondere die Fig. 4 und 6 erkennen. Die Austrittsöffnung 15 jedes Ventilelements 11 ist in der Lagerfläche 16 entsprechend exzentrisch zur Hauptachse H angeordnet, derart, daß diese Austrittsöffnung 15 durch jeweiliges Drehen des Ventilelements 11 um die Hauptachse H entweder mit dem Mischkammer-Einlaß 27 oder mit dem Austrittskanal 22 bzw. 24 an der Einmündungstelle 28 zur Deckung gebracht, d.h. zur Herstellung eines Strömungsweges verbunden werden kann.

Die Lage und Größe der einzelnen Öffnungen oder Mündungen läßt sich so wählen, daß beim Übergang aus der einen in die andere Position zumindest eine Stellung vorhanden ist, in welcher die Austrittsöffnung durch die Sitzfläche 17 abgesperrt ist. Insbesondere kann die Ausbildung aber auch so getroffen werden, daß eine ggfs. sehr geringe Überschneidung vorhanden ist, so daß sich ein stoßfreier Übergang ergibt.

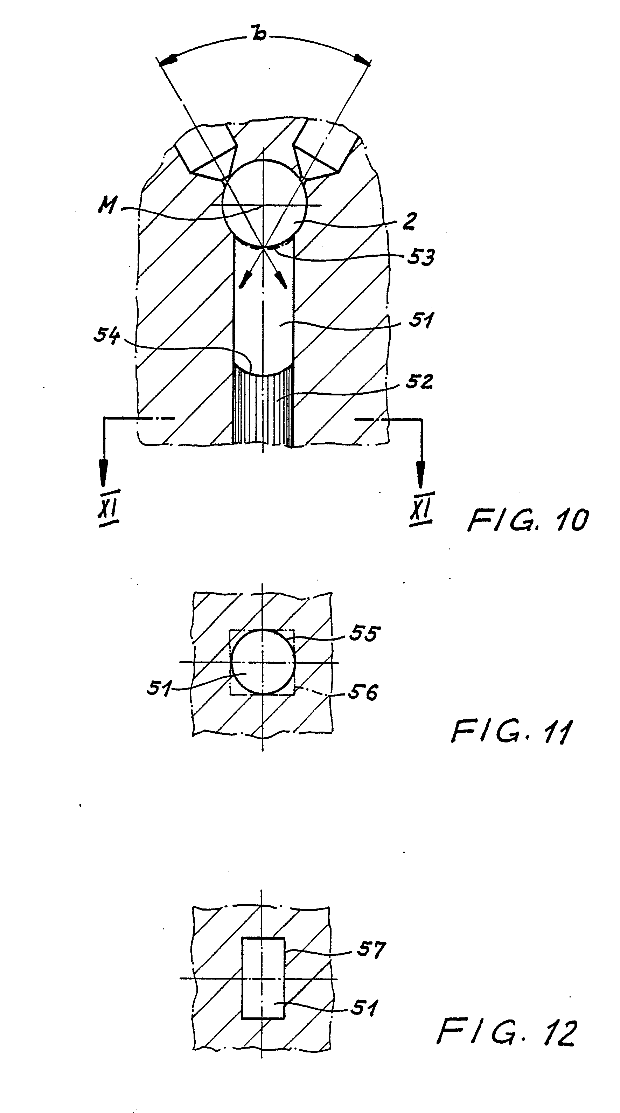

Die Ventilelemente 11 und die sie umgebenden Teile sind so ausgebildet und angeordnet, daß die Richtungen der Austrittsöffnungen 15 der Ventilelemente in der Einspritzposition und damit die Wege, welche die Strahlen des Materials durch die Einlässe 27 hindurch nehmen, unter einem spitzen Winkel stehen. Dieser Winkel ist in Fig. 10 mit dem Buchstaben b bezeichnet. Er beträgt vorteilhaft etwa 60 Grad. Praktisch ist dieser Winkel mit dem Winkel vergleichbar oder im wesentlichen übereinstimmend, den die Hauptachsen H der beiden Ventilaggregate V1 und V2 miteinander bilden (vgl. Fig.2).

Die Ventilelemente 11 bzw. deren Austrittsöffnungen 15 sind bei der gezeigten Ausführung als Dusen ausgebildet. Im Innenraum 14 jedes Ventilelements 11 befindet sich eine am Ende kegelig zulaufende Düsennadel 30, der eine kegelige Fläche 29 vor der Austrittsöffnung 15 zugeordnet ist. Die Düsennadeln 30 lassen sich mittels Schraubeinrichtungen 31 in Achsrichtung so einstellen, wie es den jeweiligen Erfordernissen am besten entspricht. In manchen Fällen kann auch lediglich eine einfache Lochdüse als Austrittsöffnung vorgesehen sein.

Zum Drehen der Ventilelemente II aus der einen in die andere der erläuterten Positionen, ggfs. auch in eine Zwischenposition, sind bei der gezeigten Ausführung Zahnstangentriebe 35 vorgesehen. Jedes Ventilelement 11 weist ein Zahnsegment 36 auf, in das eine Zahnstange 37 eingreift, die in Ausnehmungen 34 des Gehäuses 1 gleiten kann. Die Zahnstangen 37 befinden sich jeweils an einer Antriebsstange 38. Die beiden letzteren sind mit den Enden in einem Kopf 39 einstellbar befestigt.

In einem ersten Zylinder 40 ist ein erster Kolben 41 verschiebbar, an dem unmittelbar oder auch mittelbar der Ausstoßschieber 4 befestigt ist. Ein zweiter Kolben 43 gleitet in einem zweiten Zylinder 42, der in axialer Hintereinanderanordnung mit dem Zylinder 40 zusammengebaut ist. Ein Ende 44 des Zylinders 42 ist mit einem Druckmittel-Anschluß 45 versehen. Über einen Kanal 46 ist der Zylinderraum 44 mit dem entsprechenden Ende des ersten Zylinders 40 verbunden. Das entgegengesetzte Ende des Zylinders 40 ist mit einem Druckmittel-Anschluß 47 versehen. Der zweite Kolben 43 weist einen Stößel 48 auf, der sich durch eine mit einer oder mehreren Dichtungen versehene Vohrung 49 in Richtung auf den Kolben 41 erstreckt und mit seiner Stirnfläche zur Anlage an diesem kommen kann. Auf der entgegengesetzten Seite ist der zweite Kolben 43 mit einer Kolbenstange 63 versehen, die durch eine abgedichtete Bohrung 62 im Zylindergehäuse 64 nach außen geführt ist. Auf der Kolbenstange 63 ist lösbar eine zweiteilige Hülse 66 befestigt, auf deren zylindrischer Außenseite der Kopf 39 mit einer entsprechenden Bohrung verschiebbar geführt ist. Schultern an den Enden der Hulse 66 stellen dabei wegbegrenzende Anschläge dar. Mit der Zahl 65 ist ein Zwischenraum oder Spalt zwischen der betreffenden Begrenzungsfläche des Kopfes 39 und der jeweiligen Schulter der Hülse 66 bezeichnet, der einen Leerweg in dieser bewegungsübertragenden Verbindung 39, 66 zwischen der Kolbenstange 63 des zweiten Kolbens 43 und der Antriebsstange 38 mit Zahnstange 37 als dem zum jeweiligen Ventilelement 11 führenden Getriebeglied bildet.

Wird über den 'Anschluß 45 Hyraulikflüssigkeit oder ein anderes geeignetes Druckmedium zugeführt (vgl. auch Fig. 13), so wird nicht nur der Kolben 43, sondern wegen der Verbindung über den Kanal 46 auch der Kolben 41 beaufschlagt. Beide Kolben 41 und 43 bewegen sich daher vorwärts (in Fig. 1 nach unten), wobei aus dem Zylinder 40 verdrängtes Medium über den Anschluß 47 abströmt. Die Antriebsstange 38 (Fig. 1) bleibt dabei noch so lange in Ruhe, bis der Leerweg 65 zurückgelegt ist. Erst dann erfolgt über den Kopf 39 die Mitnahme der Antriebsstange 38 und über die Zahnstangentriebe 35 somit eine Verstellung der Ventilelemente 11.

Die Größe des Leerweges 65 kann durch entsprechende Länge der Hülse bzw. Austausch derselben gegen eine Hülse mit anderer Länge den jeweiligen Erfordernissen leicht angepaßt werden. Darüber hinaus sind auch noch andere gleichwertige Einstellmöglichkeiten anwendbar. Vorteilhaft wird der Leerweg 65 so gewählt, daß die Ventilelemente 11 erst dann aus der Einspritzposition zur Zirkulationsposition hin gedreht werden, wenn der Ausstoßschieber 4 die Mischkammer-Einlässe 27 überdeckt hat.

Der Hub des Kolbens 43 braucht im Vergleich zum Hub des Kolbens 41 nur verhältnismäßig klein zu sein, um die Ventilelemente 11 über die Zahnstangentriebe 35 zu verstellen. Wenn sich der Kolben 43 am Ende seines Arbeitshubes an das Zylinderende anlegt und dadurch zum Stillstand kommt, fährt der Kolben 41 ungehindert in seiner Bewegung fort.

Zur Rückstellung der Kolben wird über den Anschluß 47 Druckmedium zugeführt. Der Kolben 41 bewegt sich in seine hintere Position (in Fig. 1 nach oben). Im letzten Teil dieser Bewegung kommt der Stößel 48 des Kolbens 43 zur Anlage am Kolben 41, so daß dadurch nun auch der Kolben 43 in seine hintere Position gebracht wird. Das aus dem Zylinderraum 44 verdrängte · Medium strömt über den Anschluß 45 ab.

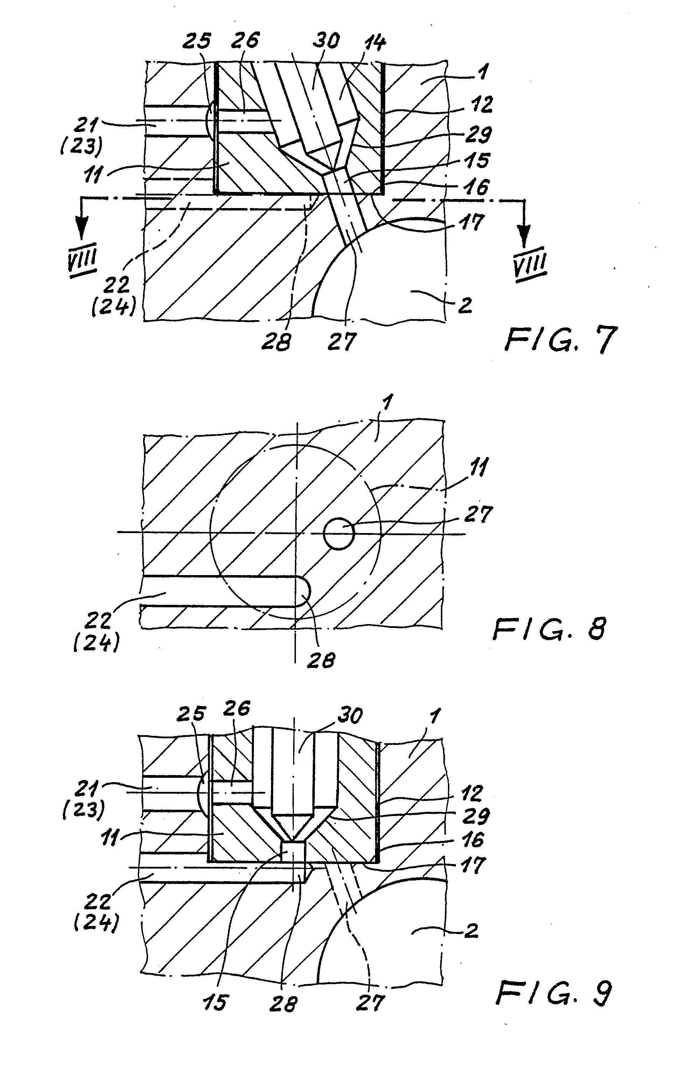

Vorteilhaft wird so verfahren, daß in der in Fig. 1 wiedergegebenen zurückgezogenen Position des Ausstoßschiebers 4 die Ventilelemente 11 in die Einspritzposition gebracht werden (Fig. 7), so daß die beiden Komponenten sich in der Mischkammer 2 zu einem Gemisch vereinigen. Nach einer vorgebbaren Öffnungszeit wird die Vorbewegung des Ausstoßschiebers 4 eingeleitet, wobei dieser die Einlässe 27 abschließt. In bestimmter zeitlicher Zuordnung zu diesem Vorgang (bei einer Vorrichtung der erläuterten Art durch entsprechende Wahl des Leerweges 65, bei einer anders ausgebildeten Vorrichtung durch andere geeignete Einstellungen) werden die Ventilelemente aus der bis dahin bestehenden Betriebsposition in die Ruheposition mittels der Zahnstangentriebe 35 umgeschaltet, worauf dann die über die Eintrittskanäle 21 und 23 zugeführten Komponenten ihren Weg über die Innenräume 14 der Ventilelemente 14 zu den Austrittskanälen 22 und 24 zurück nehmen. Dies ist die Zirkulationsstellung. Der Ausstoßschieber 4 setzt seinen Weg bis zum Auslaß 3 der Mischkammer 2 fort, wobei er das gebildete Gemisch in die Form bringt.

In der Zeichnung ist darüber hinaus eine besonders vorteilhafte Ausbildung einer Vorrichtung zur Herstellung eines Reaktionsgemisches dargestellt, die insbesondere die vorstehend im einzelnen erläuterten Merkmale aufweisen kann, aber auch unabhängig davon bei anderer Ausführung und Anordnung von Ventilelementen oder ähnlichen Teilen günstig sein kann. Es handelt sich dabei um eine Zusatzkammer, wie sie nachstehend im einzelnen erläutert wird.

Wie besonders die Fig. 1 und 2 sowie 10 bis 12 erkennen lassen, ist gegenüber den Mischkammer-Einlässen 27 für die Komponenten eine Zusatzkammer 51 derart angeordnet, daß die aus den Einlässen 27 austretenden Materialstrahlen die Mischkammer 2 queren und sich kreuzend und vermischend unmittelbar in die Zusatzkammer 51 gelangen. Wie schon weiter oben erwähnt, beträgt der Winkel b, unter dem die Materialstrahlen die Einlässe 27 verlassen, etwa 60 Grad. Je nach den Abmessungen der Mischkammer kann dieser Winkel auch noch kleiner sein. Wichtig ist, daß die Anordnung so getroffen wird, daß zumindest der wesentliche Teil des sich zu Anfang bildenden Gemisches in der Zusatzkammer entsteht.

Die Zusatzkammer ist bei der dargestellten Ausführung im rechten Winkel zur Mittelachse M der Mischkammer 2 angeordnet. Es kann aber auch ein anderer Winkel gewählt werden, wenn dies unter anderen Gegebenheiten zur Erzielung der angestrebten Wirkung günstig ist.

In der Zusatzkammer 51 ist ein deren Querschnitt angepaßter Hilfsschieber 52 zwischen einer hinteren Position (Fig. 1, 2 und 10) und einer in Fig. 10 mit strichpunktierten Linien 53 angedeuteten vorderen Abschlußposition hin-und herbewegbar. Die Stirnfläche 54 des Hilfsschiebers ist so geformt, daß sie in der vorgeschobenen Position einen Teil der Wandung der Mischkammer 2 bildet. Bei zylindrischer Mischkammer ist die Stirnfläche 54 des Hilfsschiebers 52 also Teil einer Zylinderfläche.

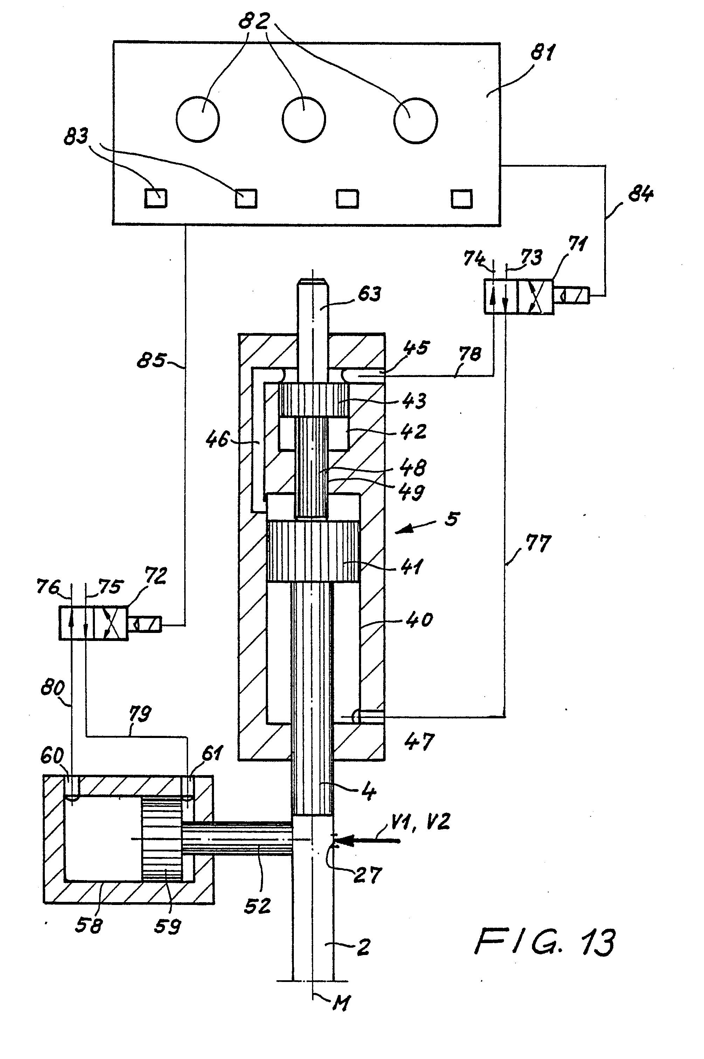

Die Zusatzkammer 51 kann einen kreisförmigen Querschnitt 55 haben, wie Fig. 11 erkennen läßt. Es kann aber auch vorteilhaft sein, der Zusatzkammer 51 einen prismatischen Querschnitt zu geben, insbesondere einen viereckigen Querschnitt. In Fig. 11 ist ein quadratischer Querschnitt strichpunktiert bei der Linie 56 angedeutet, während Fig. 12 einen rechteckigen Querschnitt 57 zeigt.

Zum Bewegen des Hilfsschiebers 52 ist bei der dargestellten Ausführung ein Hydraulikzylinder 58 mit darin verschiebbarem Kolben 59 vorgesehen (Fig. 1 und 2). Die Druckmittelanschlüsse sind mit den Zahlen 60 und 61 bezeichnet.

Bei einem vorteilhaften Verfahren zur Bildung des Gemisches wird jeweils bei einem Arbeitstakt beispielsweise von einem Zustand ausgegangen, bei dem sich der Ausstoßschieber 4 in zurückgezogener Position befindet und der Hilfsschieber 52 vorgeschoben ist (strichpunktierte Abschlußposition 53 in Fig. 10). In engem zeitlichen Zusammenhang mit dem Öffnen der Mischkammer-Einlässe 27, bei einer Vorrichtung der weiter oben erläuterten Art also mit dem Überführen der Ventilelemente 11 in die Einspritzposition (Fig. 7) wird der Hilfsschieber 52 mittels seines Antriebs 58, 59 in die hintere Position bewegt, so daß die Zusatzkammer 51 freigegeben wird. Dieser Vorgang kann gleichzeitig mit dem Öffnen der Mischkammer-Einlässe 27 erfolgen. Vorteilhaft wird diese Rückzugsbewegung des Hilfsschiebers 52 etwas vor dem Freigeben der Einlässe 27 eingeleitet. Auf jeden Fall werden die genannten Vorgänge je nach den Umständen zeitlich so abgestimmt, daß das Anfangsgemisch, zumindest mit seinem wesentlichen Teil, zunächst in der Zusatzkammer 51 verbleibt, während die weitere Gemischbildung sich dann im wesentlichen in der Mischkammer 2 vollzieht.

Gegen Ende des Mischvorganges wird der Hilfsschieber 52 in seine vordere Abschlußposition gebracht und schiebt dabei das in der Zusatzkammer 51 befindliche Gemisch in die Mischkammer aus. Zweckmäßig wird während dieses Vorganges Komponenten-Material durch die Einlässe 27 noch weiterhin in die Mischkammer eingespritzt. Dies bedeutet bei einer Vorrichtung mit Ventilaggregaten V1 und V2 der erläuterten Art, daß sich die Ventilelemente noch in Einspritzposition befinden.

Wenn der Hilfsschieber 52 seine vordere Abschlußposition erreicht hat, kann der Vorgang beendet werden. Auch dabei können die Vorgänge in ihrer zeitlichen Zuordnung verschieden ablaufen. Bei einer Vorrichtung mit Ventilelementen 11 der erläuterten Art wird mit besonderem Vorteil so verfahren, daß der Ausstoßschieber 4 zunächst vorwärtsbewegt wird, und die Ventilelemente 11 erst dann in die Zirkulationsstellung umgeschaltet werden, wenn der Ausstoßschieber 4 die Einlässe 27 überdeckt hat. Damit ist auch jede Gefahr ausgeschlossen, daß in die Einlässe 27 etwas an Gemisch eintritt oder darin zurückbleibt.

In Fig. 13 ist eine Einrichtung zur Steuerung der wichtigsten erläuterten Vorgänge schematisch dargestellt. Von einer nicht gezeigten, eine oder mehrere Pumpen und sonstige bei einem Druckmittel-Versorgungssystem übliche Komponenten enthaltenden Anlage zur Lieferung von Druckmedium führen Leitungen 73 und 75 zu elektromagnetisch zu betätigenden Wegeventilen 71 und 72. Rückleitungen von diesen sind mit den Zahlen 74 und 76 bezeichnet. Vom Wegeventil 71 führt eine Leitung 78 zum Anschluß 45 des Zylinders 42 und eine Leitung 77 zum Anschluß 47 des Zylinders 40. Die Anschlüsse 60 und 61 des Zylinders 58 für den Hilfsschieber 52 sind über Leitungen 79 und 80 mit dem Wegeventil 72 verbunden. Von einer Zentraleinheit 81 zu den Wegeventilen 71 und 72 führende Steuerleitungen sind mit den Zahlen 84 und 85 bezeichnet.

Die Zentraleinheit 81 weist Einstellorgane 82 und Betätigungs-oder Schaltelemente 83 auf, z.B. in Form von Drucktasten od.dgl., und enthält im übrigen diejenigen Einrichtungen und Bauelemente, die zur Steuerung des gewünschten Ablaufs der geschilderten Vorgänge erforderlich oder zweckmäßig sind. Diese stehen im einzelnen dem Fachmann zur Verfügung.

An den Einstellorganen 82 können namentlich der zeitliche Ablauf und die Zuordnung der einzelnen Vorgänge zueinander eingestellt werden, so z.B. die Schaltzeitpunkte bzw. die Dauer der jeweiligen Schaltstellungen oder Betriebszustände.

Alle in der vorstehenden Beschreibung erwähnten bzw. in der Zeichnung dargestellten Merkmale sollen, sofern der bekannte Stand der Technik es zuläßt, für sich allein oder auch in Kombinationen als unter die Erfindung fallend angesehen werden.

## Ansprüche

1. Vorrichtung zur Bildung eines Kunststoff-Reaktionsgemisches aus wenigstens zwei Komponenten, insbesondere für die Herstellung von Polyurethanschaum-Produkten, mit einem Gehäuse, in dem für jede Komponente ein Eintrittskanal und ein Austrittskanal vorhanden ist, die jeweils mit einer Aufnahmebohrung für ein Ventilelement in Verbindung stehen, das in der Aufnahmebohrung in wenigstens zwei Betriebsstellungen, nämlich eine Einspritzposition und eine Zirkulationsposition, um eine Hauptachse drehbar ist und einen Innenraum aufweist, der in jeder Betriebsstellung des Ventilelements mit dem Eintrittskanal verbunden ist und eine Austrittsöffnung hat, ferner mit einer Mischkammer, deren Verbindung mit der Austrittsöffnung des Ventilelements durch Drehen des letzteren freigebbar bzw. absperrbar ist, wobei im abgesperrten Zustand der Innenraum des Ventilelements mit dem Austrittskanal des Gehäuses in Verbindung bringbar ist, dadurch gekennzeichnet, daß das Ventilelement (11) eine stirnseitige Lagerfläche (16) aufweist, die an einer Sitzfläche (17) des Gehäuses (1) anliegt, daß von der Sitzfläche (17) einerseits ein Mischkammer-Einlaß - (27) und andererseits ein Austrittskanal (22 bzw. 24), wenigstens mit einem Teil seines Querschnitts, ausgeht, daß die Austrittsöffnung (15) des Ventilelements (11) in der stirnseitigen Lagerfläche (16) desselben exzentrisch zur Hauptachse (H) angeordnet ist, derart, daß diese Austrittsöffnung (15) durch jeweiliges Drehen des Ventilelements (11) mit dem Mischkammer-Einlaß (27) bzw. mit dem Austrittskanal (22 bzw. 24) verbindbar ist, und daß der Mischkammer (2) ein Ausstoßschieber (4) zugeordnet ist, der mittels eines Antriebs (5) zwischen einer zurückgezogenen Position und einer die Mischkammer (2) zumindest weitgehend ausfüllenden vorgeschobenen Position hin-und herbewegbar ist.

2. Vorrichtung nach Anspruch 1, dadurch gekennzeichnet, daß die Ventilelemente (11) durch Druckfedern (18) belastet sind.

3. Vorrichtung nach einem der Ansprüche 1 und 2, dadurch gekennzeichnet, daß die Austrittsöffnung (15) in wenigstens einem Ventilelement (11) als Düse ausgebildet ist, insbesondere als einstellbare Düse (15, 29, 30).

4. Vorrichtung nach einem der Ansprüche 1 bis 3, dadurch gekennzeichnet, daß der Innenraum (14) des Ventilelements (11) unter einem Winkel gegenüber der Hauptachse (H) angeordnet ist.

5. Vorrichtung nach einem der Ansprüche 1 bis 4, dadurch gekennzeichnet, daß die Richtungen der Austrittsöffnungen (15) der Ventilelemente (15) in der Einspritzposition in einem spitzen Winkel stehen, insbesondere einem Winkel von etwa 60 Grad.

6. Vorrichtung nach einem der Ansprüche 1 bis 5, dadurch gekennzeichnet, daß zwischen der Einspritzposition und der Zirkulationsposition des Ventilelements (11) ein Schließbereich vorgesehen ist, in dem die Austrittsöffnung (15) des Ventilelements (11) weder mit dem Mischkammer-Einlaß (27) noch mit dem Austrittskanal (22 bzw. 24) in Verbindung steht.

7. Vorrichtung nach einem der Ansprüche 1 bis 5, dadurch gekennzeichnet, daß zwischen der Einspritzposition und der Zirkulationsposition des Ventilelements (11) ein Übergangsbereich vorgesehen ist, in dem die Austrittsöffnung (15) des Ventilelements (11) sowohl mit dem Mischkammer-Einlaß - (27) als auch mit dem Austrittskanal (22 bzw. 24) in Verbindung steht.

8. Vorrichtung nach einem der Ansprüche 1 bis 7, dadurch gekennzeichnet, daß ein Druckmittelantrieb (42, 43) zum Drehen wenigstens eines Ventilelements (11) mit einem Druckmittelantrieb (40, 41) zum Bewegen des Ausstoßschiebers (4) kombiniert ist.

9. Vorrichtung nach Anspruch 8, dadurch gekennzeichnet, daß anschließend an einen ersten Zylinder (40) mit erstem Kolben (41) als Antrieb für den Ausstoßschieber (4) ein zweiter Zylinder (42) mit zweitem Kolben (43) als Ventilelement-Antrieb vorgesehen ist, wobei eine Kolbenstange (63) des zweiten Kolbens (43) mit einem zum Ventilelement (11) führenden Getriebeglied (38) über eine bewegungsübertragende Verbindung (39, 66) gekuppelt ist.

10. Vorrichtung nach Anspruch 9, dadurch gekennzeichnet, daß zwei einander entsprechende Räume der beiden Zylinder (40, 42) leitungsmäßig miteinander verbunden sind.

11. Vorrichtung nach einem der Ansprüche 9 und 10, dadurch gekennzeichnet, daß der zweite Kolben (43) einen dem ersten Kolben (41) zugewandten und zur zeitweiligen Anlage an diesem eingerichteten Stößel (48) aufweist.

12. Vorrichtung nach einem der Ansprüche 9 bis 11, dadurch gekennzeichnet, daß in der bewegungsübertragenden Verbindung (39, 66) ein Leerweg (65) vorgesehen ist.

13. Vorrichtung zur Bildung eines Kunststoff-Reaktionsgemisches aus wenigstens zwei Komponenten, insbesondere für die Herstellung von Polyurethanschaum-Produkten, mit einem Gehäuse, in dem für jede Komponente ein Eintrittskanal und ein Austrittskanal vorhanden ist, einer Mischkammer mit Einlässen für die Komponenten und einem Auslaß für das Gemisch, insbesondere nach einem oder mehreren der Ansprüche 1 bis 12, dadurch gekennzeichnet, daß gegenüber den Mischkammer-Einlässen (27) für die Komponenten eine in einem Winkel, insbesondere im rechten Winkel, zur Mischkammer (2) angeordnete Zusatzkammer (51) mit Kreisquerschnitt (55) oder mit prismatischem Querschnitt (56 bzw. 57), insbesondere viereckigem Querschnitt, vorgesehen ist, in der ein deren Querschnitt angepaßter Hilfsschieber (52) mittels steuerbaren Antriebs (58, 59) zwischen einer hinteren Position und einer vorderen Abschlußposition, in der eine Stirnfläche (54) des Hilfsschiebers (52) einen Teil der Wandung der Mischkammer (2) bildet, hin-und herbewegbar ist.

14. Vorrichtung nach Anspruch 13, gekennzeichnet durch eine Einrichtung (81, 82, 83, 71, 72) zum Steuern der Betätigung der Ventilelemente (11) des Ausstoßschiebers (4) und des Hilfsschiebers (52) in vorgebbarer zeitlicher Zuordnung.

15. Verfahren zur Bildung eines Kunststoff-Reaktionsgemisches aus wenigstens zwei Komponenten, insbesondere für die Herstellung von Polyurethanschaum-Produkten, mit einer Vorrichtung, die ein Gehäuse mit einem Eintrittskanal und einem Austrittskanal für jede Komponente und mit einer Mischkammer mit durch drehbare Ventilelemente zu schließenden und zu öffnenden Einlässen für die Komponenten und einem Auslaß für das Gemisch aufweist und bei der nach einem oder mehreren der Ansprüche 1 bis 12 die drehbaren Ventilelemente mit stirnseitigen Lagerflächen an Sitzflächen des Gehäuses anliegen und Austrittsöffnungen der Ventilelemente in der stirnseitigen Lagerfläche exzentrisch zu einer Hauptachse angeordnet sind und ein der Mischkammer zugeordneter Ausstoßschieber vorhanden ist, der mittels eines Antriebs zwischen einer zurückgezogenen Position und einer die Mischkammer zumindest weitgehend ausfüllenden vorgeschobenen Position hin-und herbewegbar ist, insbesondere weiterhin mit einer Zusatzkammer mit Hilfsschieber nach Anspruch 13 oder 14, dadurch gekennzeichnet, daß am Ende eines Mischvorganges zunächst der Ausstoßschieber (4) vorbewegt wird und die Ventilelemente (11) erst dann aus ihrer Einspritzposition zur Zirkulationsposition hin verstellt werden, wenn die Mischkammer-Einlässe (27) durch den Ausstoßschieber (4) überdeckt sind.

16. Verfahren zur Bildung eines Kunststoff-Reaktionsgemisches aus wenigstens zwei Komponenten, insbesondere für die Herstellung von Polyurethanschaum-Produkten, mit einer Vorrichtung, die ein Gehäuse mit einem Eintrittskanal und einem Austrittskanal für jede Komponente, eine Mischkammer mit zu schließenden und zu öffnenden Einlässen für die Komponenten und einen Auslaß für das Gemisch sowie einen mittels steuerbaren Antriebs bewegbaren Ausstoßschieber aufweist, und bei der gemäß Anspruch 13 oder 14 gegenüber den Mischkammer-Einlässen eine in einem Winkel zur Mischkammer angeordnete Zusatzkammer vorgesehen ist, in der ein deren Querschnitt angepaßter Hilfsschieber mittels steuerbaren Antriebs zwischen einer hinteren Position und einer vorderen Abschlußposition, in der eine Stirnfläche des Hilfsschiebers einen Teil der Wandung der Mischkammer bildet, hin-und herbewegbar ist, insbesondere mit einer gemäß den Ansprüchen 1 bis 12 ausgebildeten Vorrichtung, dadurch gekennzeichnet, daß jeweils bei einem Arbeitstakt bei in seiner vorderen Abschlußposition befindlichem Hilfsschieber (52) und zurückgezogenem Ausstoßschieber (4) in engem zeitlichem Zusammenhang mit dem Öffnen der Mischkammer-Einlässe (27) der Hilfsschieber (52) in seine hintere Position bewegt und dadurch die Zusatzkammer (51) freigegeben wird und daß gegen Ende drs Mischvorganges noch vor dem Verschließen der Mischkammer-Einlässe (27) der Hilfsschieber (52) in seine vordere Abschlußposition gebracht und hiernach der Ausstoßschieber (4) vorbewegt wird.

0 283 988

FIG. 1

FIG. 2

0 283 988

FIG. 3

FIG. 5

FIG. 4

FIG. 6

0 283 988

FIG. 7

FIG. 8

FIG. 9

0 283 988

FIG. 10

FIG. 11

FIG. 12

0 283 988

FIG. 13